# EUROPÄISCHE PATENTSCHRIFT

(11) **EP 2 566 718 B1**
(45) Veröffentlichungstag und Bekanntmachung des Hinweises auf die Patenterteilung: **03.09.2014**
(21) Anmeldenummer: 11720060.0
(22) Anmeldetag: 29.04.2011
(51) Int. Cl.: B60N 2/02, B60N 2/06, B60N 2/07, B60N 2/08, B60N 2/16

(54) **SITZUNTERGESTELL FÜR EINEN KRAFTFAHRZEUGSITZ**
SEAT BASE FOR A VEHICLE SEAT
SUPPORT DE SIÈGE DE SIÈGE DE VÉHICULE

(30) Priorität: 05.05.2010 DE 102010028630
(43) Veröffentlichungstag der Anmeldung: 13.03.2013
(73) Patentinhaber: Johnson Controls Metals and Mechanisms GmbH & Co. KG, 42699 Solingen (DE)
(72) Erfinder: BENEKER, Wilfried, 42799 Leichlingen (DE); DICK, Andre, 42657 Solingen (DE); MÜLLER, Toralf, 51373 Leverkusen (DE); SPRINGENBERG, Stephan, 42489 Wülfrath (DE); HANISCH, Dirk, 50825 Köln (DE)
(74) Vertreter: Kalkoff & Partner
(86) Internationale Anmeldenummer: PCT/EP2011/056866
(87) Internationale Veröffentlichungsnummer: WO 2011/138249

(56) Entgegenhaltungen:
- DE-A1-102006 043 759
- DE-U1- 29 814 449
- FR-A1- 2 883 521

## Beschreibung

Die Erfindung betrifft ein Sitzuntergestell für einen Kraftfahrzeugsitz, mit
- parallel im Abstand voneinander angeordneten Schienenpaaren, mit
   - jeweils einer längsverschiebbar gegenüber einer Unterschiene geführten, über eine Verriegelungsvorrichtung an der Unterschiene arretierbaren Oberschiene,
- einer Sitzstruktur, die mit den Oberschienen verbunden ist und
- einem sich im Wesentlichen rechtwinklig zu den Oberschienen erstreckenden und mit diesen verbundenem Querträger.

Sitzuntergestelle der eingangs genannten Art sind in vielfältigen Ausgestaltungen aus dem Stand der Technik bekannt. Diese erlauben in der Regel nach einer manuellen Betätigung der Verriegelungsvorrichtung eine Längsverstellung einer mit dem Sitzuntergestell verbundenen Sitzstruktur, wobei die mit der Sitzstruktur verbundenen Oberschienen relativ gegenüber den bodenfest, d. h. am Fahrzeugboden befestigten Unterschienen verschoben werden können. Die Verriegelungsvorrichtungen erlauben dabei eine lösbare Arretierung der Oberschiene an der Unterschiene und somit der Sitzstruktur gegenüber der Unterschiene in der gewählten Längseinstellung des Kraftfahrzeugsitzes.

Insbesondere solche Sitzuntergestelle - jedoch nicht hierauf beschränkt - deren Sitzstruktur, bspw. eine Sitzschale, asymmetrisch gegenüber den Schienenpaaren angeordnet ist, d. h. bei denen die Sitzstruktur des Fahrzeugsitzes in der Einbaulage gegenüber den Sitzschienen in Richtung auf die Fahrzeugaußenseite oder die Fahrzeugmitte verschoben angeordnet ist, machen die Verwendungen eines sich zwischen den Oberschienen erstreckenden, die erforderliche Stabilität gewährleistenden Querträgers erforderlich. Dieser dient zur Aussteifung des Sitzuntergestells, wobei insbesondere die asymmetrische Anordnung der Sitzstruktur gegenüber den Schienenpaaren mit den dann gegenüber den Oberschienen zur Fahrzeugmitte oder -außenseite versetzt verlaufenden Lagerpunkten mit der Sitzstruktur ein Moment bedingt, welches insbesondere im Crashfall zu einer erhöhten Belastung des Sitzuntergestells mit der Gefahr dessen Kollabierens führt.

Um eine Längsverschiebbarkeit, d. h . eine Verschiebung der Oberschiene gegenüber der Unterschiene zu ermöglichen, ist es ferner erforderlich, ein Betätigungsmittel vorzusehen, welches eine Bedienung der Verriegelungsvorrichtung erlaubt, so dass diese aus einer die Oberschiene an der Unterschiene festlegenden Arretierungsposition in eine die Oberschiene freigebende Freigabeposition bewegbar ist, in der die Oberschiene gegenüber der Unterschiene verschoben werden kann. Nachdem die Verriegelungsvorrichtung üblicherweise an beiden Schienenpaaren angeordnet ist, ist zudem ein Übertragungsmittel, bspw. eine Übertragungswelle erforderlich, welche eine Übertragung der Betätigung auf beide Verriegelungsvorrichtungen ermöglicht.

Bekannten Sitzuntergestelle mit einem Querträger zur Stabilisierung sowie einer Betätigungswelle zur Bedienung der Verriegelungsvorrichtung weisen den Nachteil auf, dass sie einen erhöhten Bauraum beanspruchen. Darüber hinaus bedingt die höhere Teilezahl höhere Herstellungskosten derartiger Sitzuntergestelle.

Ein gattungsgemäßes Sitzuntergestell ist aus dem Dokument DE-A-102006043759 bekannt.

Der Erfindung liegt die Aufgabe zugrunde, ein Sitzuntergestell bereitzustellen, das bei ausreichender Stabilität und Betätigungsmöglichkeit der Verriegelungsvorrichtungen einen geringeren Bauraum benötigt.

Die Erfindung löst die Aufgabe durch ein Sitzuntergestell mit den Merkmalen des Anspruchs 1. Vorteilhafte Weiterbildungen der Erfindung sind in den abhängigen Ansprüchen angegeben.

Kennzeichnend für das erfindungsgemäße Sitzuntergestell ist, dass der Querträger die Schienenpaare crashstabil gegeneinander abstützend in seiner axialen Richtung gegenüber den Oberschienen festgelegt, gleichzeitig jedoch drehbar mit diesem verbunden ist. Die axiale Festlegung des Querträgers gegenüber den Oberschienen gewährleistet eine zuverlässige Abstützung der Schienenpaare gegeneinander und somit eine hohe Stabilität des Sitzuntergestells. Einem Kollabieren des Sitzuntergestells, insbesondere im Crashfall, infolge einer Bewegung der Schienenpaare zueinander, insbesondere in der Einbaulage am Fahrzeug quer zur Fahrzeugrichtung, wird hierdurch zuverlässig vorgebeugt.

Die darüber hinaus bestehende Verdrehbarkeit des Querträgers nach Art einer Welle ermöglicht es gleichzeitig, diesen zur Betätigung der die Oberschiene gegenüber der Unterschiene in Längsachsenrichtung der Schienenpaare festlegenden Verriegelungsvorrichtung zu verwenden. Hierzu sind an dem Querträger ein Bedienhebel und ein Steuerungshebel im Abstand voneinander verdrehfest und jeweils mit einer Verriegelungsvorrichtung eines Schienenpaares in Eingriff bringbar angeordnet. Eine üblicherweise manuelle Betätigung des Bedienhebels, welcher sich über den Querträger hinaus in einen Eingriffsbereich mit einer Verriegelungsvorrichtung erstreckt und bei der der Bedienhebel in der Regel angehoben wird, führt zu einem Verdrehen des Querträgers derart, dass das der Verriegelungsvorrichtung zugewandte Ende des Bedienhebels sowie der Steuerungshebel, der sich im Bereich des dem Bedienhebel gegenüberliegenden Endes des Querträgers von dem Querträger bis in den Eingriffsbereich der gegenüberliegenden Verriegelungsvorrichtung erstreckt, die Verriegelungsvorrichtungen aus ihren Arretierungspositionen in ihre Freigabepositionen bewegen, so dass eine Längsverschiebbarkeit der Oberschiene gegenüber der Unterschiene möglich ist.

Die erfindungsgemäße Ausgestaltung ermöglicht es somit, auf zusätzliche LTbertragüngsmittel zur Verstellung der Verriegelungsvorrichtungen im Falle einer gewünschten Längsverstellung zu verzichten. Der erfindungsgemäße Querträger erfüllt zum einen eine das Sitzuntergestell stabilisierende Stützfunktion und zum anderen ermöglicht er die Betätigung der Verriegelungsvorrichtungen. Somit kann auf zusätzliche, kostenerhöhende Betätigungselemente bzw. stabilisierende Abstützelemente verzichtet werden. Das erfindungsgemäße Sitzuntergestell lässt sich somit besonders einfach und kostengünstig herstellen und benötigt im Bereich zwischen den Schienenpaaren einen nur geringen Bauraum.

In einer einfachen, nicht durch die Ansprüche gedeckten Ausgestaltung ist eine Sitzstruktur, bspw. eine Sitzschale, direkt mit den Oberschienen verbunden, was die Herstellung eines besonders kostengünstigen Kraftfahrzeugsitzes ermöglicht, welcher jedoch in der Regel nicht die Möglichkeit einer Sitzhöhenverstellung bietet. Erfindungsgemäß sind an der Oberschiene eine vordere und/oder eine hintere Lagerschwinge gelenkig angeordnet. Diese Ausgestaltung ermöglicht eine gegenüber den Oberschienen verstell- bzw. verschwenkbare Anordnung der Sitzstruktur, welche hierzu gelenkig mit den Lagerschwingen, vorzugsweise in einem den Oberschienen abgewandten Bereich, verbunden ist. Eine Verschwenkung der Lagerschwingen gegenüber den Sitzoberschienen führt dann zu einer Abstandsänderung der Sitzstruktur, bspw. der Sitzschale gegenüber den Oberschienen und verbessert somit die Anpassungsmöglichkeiten eines mit diesem Sitzuntergestell verbundenen Kraftfahrzeugsitzes.

Erfindungsgemäß ist die vordere und/oder hintere Lagerschwinge jeweils gelenkig mit einem an der Oberschiene angeordneten Lagerschwingenhalter verbunden. Die Verwendung eines Lagerschwingenhalters, bzw. mehrerer Lagerschwingenhalter, welche an der Oberschiene angeordnet und gelenkig mit einer Lagerschwinge verbunden sind, erhöht den Einsatzbereich des Sitzuntergestells, nachdem hierdurch nach einer besonders vorteilhaften Weiterbildung auch eine asymmetrische Anordnung einer Sitzstruktur gegenüber den Oberschienen möglich ist. Die Lagerschwingenhalter können dabei eine gebogene Form aufweisen, die den Anlenkpunkt der Lagerschwinge mit dem zugeordneten Lagerschwingenhalter gegenüber den Schienenpaaren in Richtung aufeinander zu oder voneinander weg verschieben. Darüber hinaus weisen die Lagerschwingenhalter den Vorteil auf, dass diese sich in einfacher Weise an der Oberschiene, bspw. durch Schweißen anordnen lassen, so dass die gelenkige Verbindung im Abstand von der Oberschiene erfolgen kann. Eine Anpassung der Oberschiene zur Anordnung der Sitzstruktur oder von Lagerschwingen ist nicht erforderlich.

Erfindungsgemaß ist es vorgesehen, dass der Querträger endseitig mit zwei gegenüberliegend angeordneten Lagerschwingenhaltern, vorzugsweise vorderen Lagerschwingenhaltern in axialer Richtung festgelegt und verdrehbar mit diesen verbunden ist. Die Lagerschwingenhalter dienen in diesem Fall nicht allein der gelenkigen Aufnahme der Lagerschwingen, sondern erfüllen überdies die Funktion der verdrehbaren und in axialer Richtung festgelegten Aufnahme des Querträgers. Die Verwendung der Lagerschwingenhalter zur Aufnahme des Querträgers erleichtert dabei in besonderer Weise die Festlegung der Querträger, da auf eine entsprechende Ausgestaltung der Oberschienen verzichtet werden kann. Überdies lässt sich der Lagerschwingenhalter im Kontaktbereich mit dem Querträger in besonderer Weise anpassen, so dass eine besonders zuverlässige Anlage des Querträgers gewährleistet ist.

Es ist nach einer besonders vorteilhaften Ausgestaltung der Erfindung vorgesehen, dass die Lagerschwingen des türseitigen und fahrzeugmittigen Schienenpaares eine voneinander abweichende Geometrie aufweisen, insbesondere derart, dass die Sitzstruktur, insbesondere eine Sitzschale asymmetrisch zu den Schienenpaaren angeordnet ist. Der Einsatz der Lagerschwingen ermöglicht bspw. dadurch, dass die Lagerschwingen der beiden Schienenpaare abweichend voneinander gebogen sind, dass die Gelenkpunkte der Lagerschwinge mit der Oberschiene bzw. einem Lagerschwingenhalter gegenüber den Gelenkpunkten der Lagerschwingen mit der Sitzstruktur, insbesondere einer Sitzschale, bezüglich einer Ebene, die senkrecht zu einer durch die Schienenpaare gebildeten, im Wesentlichen parallel zum Fahrzeugboden verlaufenden Ebene verläuft, verschoben sind. Diese zu einer asymmetrischen Ausrichtung der Sitzstruktur gegenüber den Schienen führende Ausgestaltung ermöglicht es, die Fahrzeugsitze in optimaler Weise an die von den Fahrzeugherstellern geforderten Vorgaben anzupassen, wobei zunehmend eine gegenüber den Schienenpaaren versetzte Anordnung gefordert ist, welche eine türseitig oder fahrzeugmittig gerichtete Verschiebung der Sitzstruktur gegenüber den Schienenpaaren bedingt.

Insbesondere im Fall der asymmetrischen Ausrichtung der Sitzstruktur gegenüber den Schienenpaaren gewährleistet die in axialer Richtung des Querträgers erfolgte Festlegung des Querträgers gegenüber den Oberschienen, bzw. den Lagerschwingenhaltern, eine besondere Stabilität des Sitzuntergestells, die auch im Falle von im Crashfall auftretenden Belastungen wirkungsvoll ein Kollabieren des Sitzuntergestells verhindert.

Neben der vorteilhafterweise vorgesehenen Ausgestaltung der Erfindung, wonach die Lagerschwinge mindestens einer Sitzschiene, vorzugsweise beide Lagerschwingen einer Sitzschiene eine türseitig oder fahrzeugmittig gerichtete Biegung aufweisen, die zu einer asymmetrischen Anordnung der Sitzstruktur führen, kann ferner auch durch die Verwendung gebogener Lagerschwingenhalter eine ergänzende Verschiebung der Sitzstruktur gegenüber den Schienenpaaren erreicht werden.

Nach einer weiteren Ausgestaltung der Erfindung ist mindestens eine vordere Lagerschwinge mit dem Querträger in Eingriff bringbar. Gemäß dieser Weiterbildung der Erfindung kann die Lagerschwinge in Folge einer Höhenverstellung der Sitzstruktur gegenüber den Schienenpaaren in Kontakt mit dem Querträger gelangen. Hierdurch kann eine maximale Absenkposition der Sitzstruktur gegenüber dem Sitzuntergestell definiert werden. Darüber hinaus verhindert diese Ausgestaltung der Erfindung ein Durchsacken der Sitzstruktur im Crashfall, so dass die ergänzenden Sicherungssysteme wie Sicherheitsgurt und Airbag zuverlässig ihre Wirkung entfalten können.

Besonders vorteilhafterweise weist dabei die mit dem Querträger in Eingriff bringbare vordere Lagerschwinge eine an die Kontur des Querträgers angepasste Kontaktfläche auf. Hierdurch wird im Kontaktfall, bspw. im Falle eines Crashs, gewährleistet, dass es zu keiner punktuell wirkenden Belastung des Querträgers, sondern zu einer flächigen Anlage kommt, welche eine besonders gute Kraftübertragung von der Lagerschwinge auf den Querträger gewährleistet.

Die Ausgestaltung des Querträgers kann grundsätzlich in beliebiger Weise erfolgen, sofern gewährleistet ist, dass dieser in dessen Längsachsenrichtung axial an den Oberschienen abgestützt sowie gegenüber diesen drehbar gelagert ist, wobei die Drehbarkeit eine Übertragung einer an dem Bedienhebel angreifenden Verstellbewegung auf die Verriegelungsvorrichtung ermöglicht. Nach einer besonders vorteilhaften Ausgestaltung der Erfindung ist der Querträger jedoch durch ein Querrohr gebildet, welches diverse Formen, Profilierungen, Einschnürungen, o. dgl. aufweisen kann. Dieses lässt sich in besonders einfacher Weise in axialer Richtung festgelegt sowie drehbar an der Oberschiene bzw. einem Lagerschwingenhalter anordnen. Das Querrohr weist überdies eine besondere Stabilität unabhängig von der Belastungsrichtung auf.

Nach einer besonders vorteilhaften Weiterbildung der Erfindung liegt das Querrohr dabei über endseitige Stirnflächen an den Oberschienen, insbesondere an einander zugewandten Innenflächen der vorderen Lagerschwingenträger an. Eine entsprechende Ausgestaltung der Erfindung, bei der sich das Querrohr mit seinen Stirnflächen direkt an den Oberschienen bzw. an einander zugewandten Flächen der Lagerschwingenträger abstützt, gewährleistet in besonders zuverlässiger Weise eine in Längsachsenrichtung des Querrohres erfolgende Festlegung gegenüber den Schienenpaaren.

Nach einer weiteren Ausgestaltung der Erfindung sind die jeweils mit einer Verriegelungsvorrichtung in Eingriff bringbaren Bedienhebel und Steuerungshebel an den Querträger, insbesondere das Querrohr, angeschweißt, insbesondere lasergeschweißt. Im Falle einer zu erfolgenden Längsverstellung der Oberschiene gegenüber der Unterschiene wird von einem Bediener der Bedienhebel üblicherweise im Bereich seines Endes angehoben, was eine Verdrehbewegung des Querträgers bewirkt. In Folge der Verdrehbewegung des Querträgers gelangt ein sich über den Querträger hinaus vom Bediengriff erstreckendes Ende des Bedienhebels sowie ein im gegenüberliegenden Bereich des Querträgers angeordneter Steuerungshebel jeweils mit einem Betätigungselement der Verriegelungsvorrichtung in Eingriff und verschiebt diese über eine Position hinaus, in der die Verriegelungsvorrichtung eine Festlegung der Oberschiene an der Unterschiene bewirkt. Die Anordnung des Bedienhebels sowie des Steuerungshebels ist zwar grundsätzlich frei wählbar, nach dieser vorteilhaften Weiterbildung der Erfindung wird jedoch eine Schweißverbindung, insbesondere Laserschweißverbindung bevorzugt, welche in zuverlässiger Weise eine verdrehfeste Verbindung des Bedienhebels und Steuerungshebel mit dem Querträger gewährleistet.

Nachfolgend wird ein Ausführungsbeispiel der Erfindung anhand von Zeichnungen näher erläutert. In den Zeichnungen zeigen:
- Fig. 1: eine perspektivische Ansicht eines Sitzuntergestells;
- Fig. 2: eine weitere perspektivische Ansicht des Sitzuntergestells von Fig. 1;
- Fig. 3: eine perspektivische Ansicht des Sitzuntergestells von Fig. 1 ohne daran angeordnete Sitzstruktur;
- Fig. 4: eine Vorderansicht des Sitzuntergestells von Fig. 1;
- Fig. 5: eine Seitenansicht eines Schienenpaares des Sitzuntergestells von Fig. 3;
- Fig. 6: eine perspektivische Ansicht einer Seitenschiene des Sitzuntergestells von Fig. 3 mit daran angeordnetem Querträger und
- Fig. 7: in einer Explosionsdarstellung eine Verbindung des Querträgers von Fig. 1 mit einem Lagerschwingenhalter.

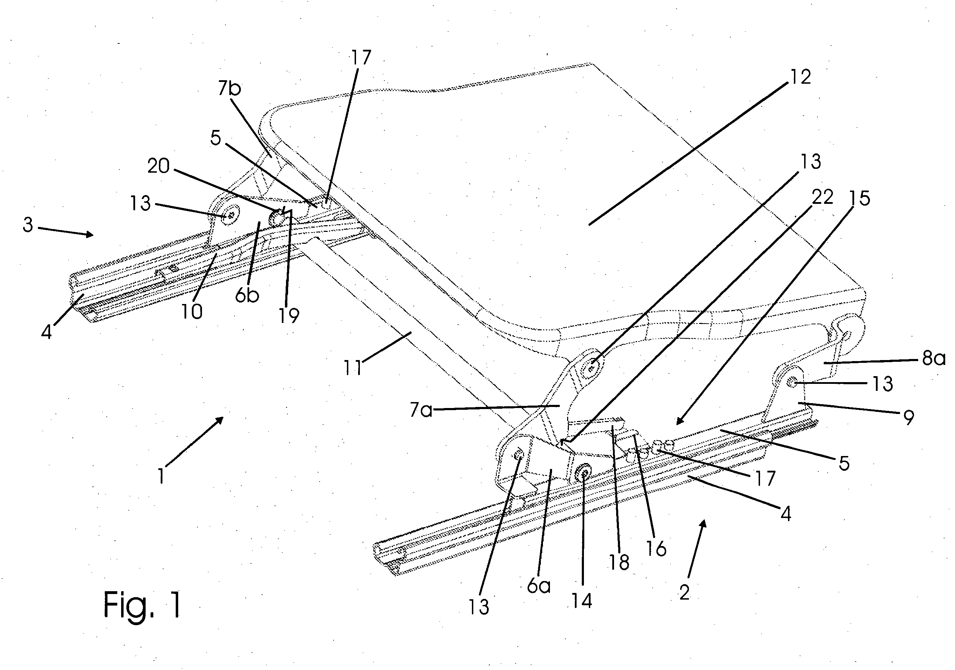

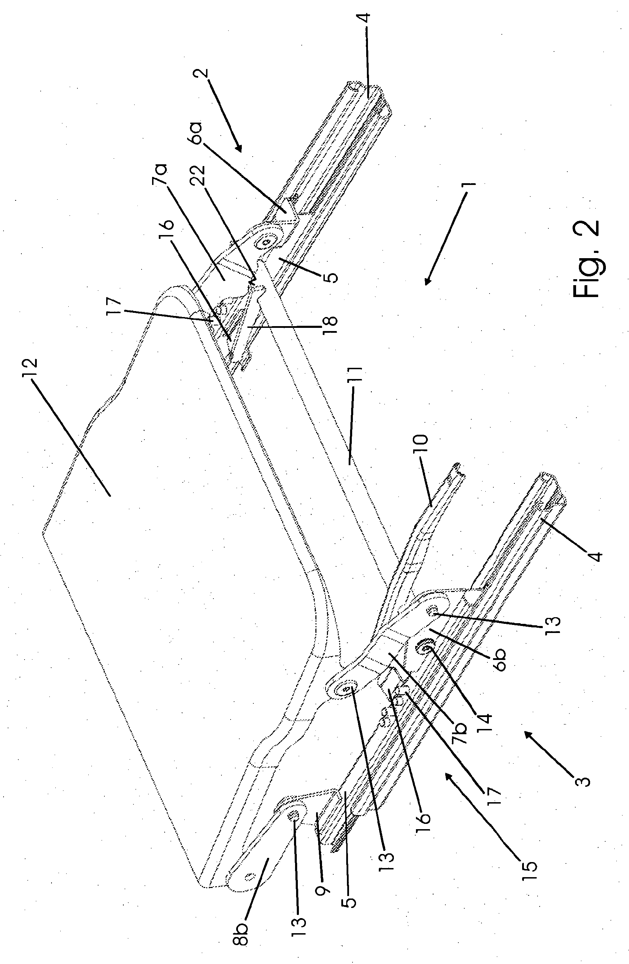

In den Figuren 1 und 2 ist in einer perspektivischen Ansicht einer Ausführungsform eines Sitzuntergestells 1 dargestellt, bei dem zwei Schienenpaare, ein türseitiges Schienenpaar 2 und ein tunnelseitiges Schienenpaar 3, über eine als Sitzfläche 12 ausgebildete Sitzstruktur miteinander verbunden sind.

Die Schienenpaare 2, 3 weisen jeweils eine an einem hier nicht dargestellten Fahrzeugboden anordbare Unterschiene 4, sowie eine in der Unterschiene 4 verschiebbar gelagerte Oberschiene 5 auf. Die Längsverschiebbarkeit der Oberschiene 5 gegenüber der Unterschiene 4 ermöglicht eine Längsverstellung der Sitzfläche 12 im Fahrzeug. Zur Verbindung der Sitzfläche 12 mit den verschiebbaren Oberschienen 5 sind dabei beiderseits der Sitzfläche 12 jeweils zwei Lagerschwingen 7a, 7b, 8a, 8b, einenends gelenkig über Lagerbolzen 13 mit der Sitzfläche 12 und anderenends gelenkig, ebenfalls über Lagerbolzen 13, mit an den Oberschienen 5 angeordneten Lagerschwingenhaltern 6a, 6b, 9 verbunden. Diese gelenkigen Verbindungen der Oberschienen 5 mit der Sitzfläche 12 ermöglicht eine Höhenverstellung der Sitzfläche 12 gegenüber den Schienenpaaren 2, 3.

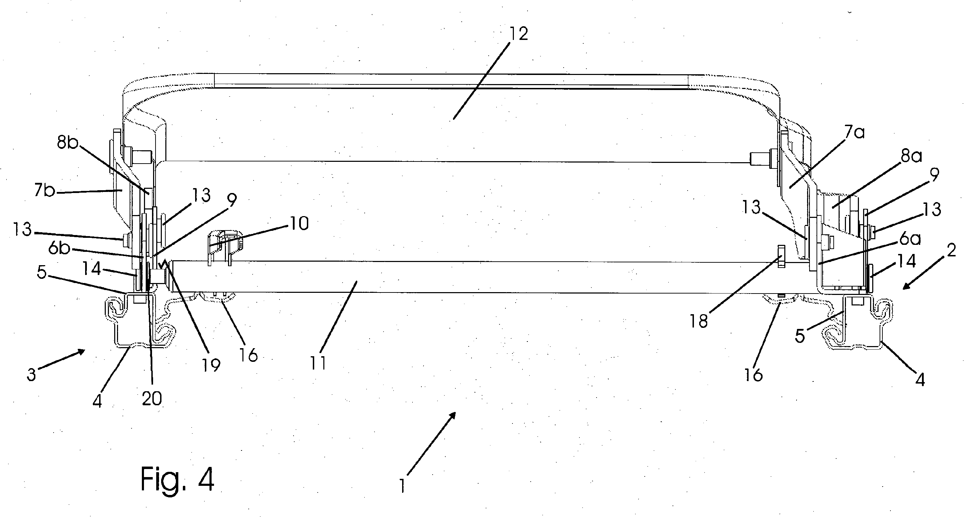

Die Lagerschwingenhalter 6a, 6b, 9 sind an den Oberschienen 5 befestigt, vorzugsweise angeschweißt. Eine in Richtung des tunnelseitigen Schienenpaares 3 abgewinkelte Ausgestaltung des vorderen Lagerschwingenhalters 6a des türseitigen Schienenpaares 2 in Verbindung mit einer ebenfalls in.Richtung auf das tunnelseitige Schienenpaar 3 gebogenen Ausgestaltung der vorderen und hinteren Lagerschwinge 7a, 8a des türseitigen Schienenpaares 2 hat zur Folge, dass die Sitzfläche 12 asymmetrisch gegenüber den Schienenpaaren 2, 3 angeordnet ist. D. h., wie insbesondere Fig. 4 zu entnehmen ist, dass die Sitzfläche 12 in Richtung auf das tunnelseitige Schienenpaar 3 verschoben angeordnet ist. Verstärkt wird die Asymmetrie dabei dadurch, - obwohl der vordere Lagerschwingenhalter 6b des tunnelseitigen Schienenpaares 3 sich im Wesentlichen senkrecht zu den Oberschienen 5 erstreckt - dass der Gelenkpunkt der vorderen Lagerschwinge 7b mit der Sitzstruktur 12 aufgrund dessen analog zur Lagerschwinge 7a ausgestalteten Biegung in eine dem türseitigen Schienenpaar 2 abgewandte Richtung verschoben ist. Im hinteren Bereich der Schienenpaare 2, 3 sind an den Oberschienen 5 hintere Lagerschwingenhalter 9 angeordnet, welche eine gelenkige Anordnung der hinteren Lagerschwingen 8a, 8b ermöglichen.

Jedem Schienenpaar 2, 3 ist eine Verriegelungsvorrichtung 15 zugeordnet. Die Verriegelungsvorrichtungen 15 weisen dabei verschiebbar an der Oberschiene 5 angeordnete Verriegelungsstifte 17 auf, von denen in einer Arretierungsposition zumindest ein Verriegelungsstift 17 in eine von mehreren, hier nicht dargestellten Öffnungen in der Unterschiene 4 eingreift und so die Oberschiene 5 jeweils gegenüber der Unterschiene 4 arretiert.

Die Verlagerung der Verriegelungsvorrichtung 15 aus der Arretierungsposition in eine Freigabeposition, in der die Verriegelungsstifte 17 mit der Unterschiene 4 außer Eingriff gelangen, erfolgt über sich von den Verriegelungsvorrichtungen 15 in Richtung auf das gegenüberliegende Schienenpaar 2, 3 erstreckende Betätigungselemente 16, deren Verstellung eine Verschiebung der Verriegelungsstifte 17 in einer Außereingriffstellung mit der Unterschiene 4 bewirkt.

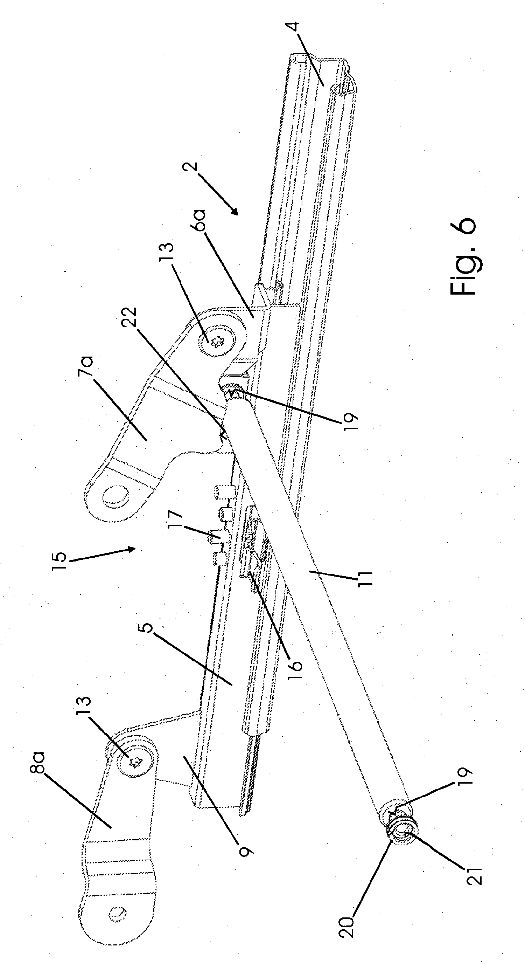

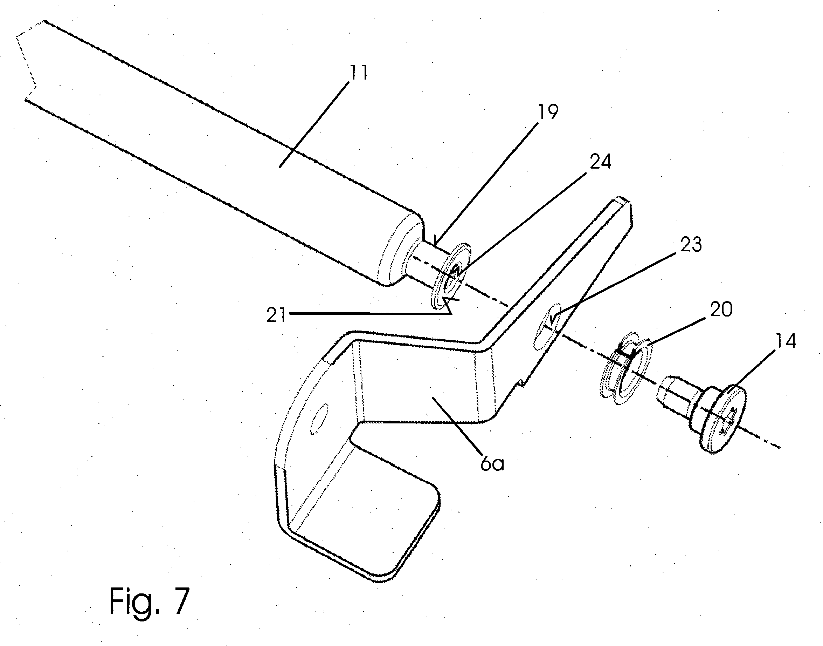

Zur Verstellung der Betätigungselemente 16 sowie zur axialen Abstützung der Schienenpaare 2, 3 gegeneinander erstreckt sich zwischen den vorderen Lagerschwingenaufnahmen 6a, 6b ein Querrohr 11. Das Querrohr 11 liegt mit seinen sich an Verjüngungen 19 anschließenden Stirnflächen 21 an den einander zugewandten Innenflächen der Lagerschwingenaufnahmen 6a, 6b an und ist somit gegenüber diesen in axialer Richtung des Querrohres 11 festgelegt. Zur Positionssicherung sowie darüber hinaus zur verdrehbaren Anordnung gegenüber den Schienenpaaren 2, 3 ist das Querrohr 11 darüber hinaus über sich durch die Lagerschwingenhalter 6a, 6b erstreckende, in stirnseitige Gewindeöffnungen 24 des Querrohres 11 eingeschraubte Gewindebolzen 14 an den Lagerschwingenhaltern 6a, 6b festgelegt. Zur drehgelenkigen Lagerung erstrecken sich dabei die Gewindebolzen 14 mit einem gewindefreien Abschnitt durch eine mit einer Lagerbuchse 20 versehene Öffnung 23 in den Lagerschwingenaufnalimen 6a, 6b (vgl. Fig. 6 und 7). Die Anordnung des Querrohres 11 an den vorderen Lagerschwingenhaltern 6a, 6b ist also derart, dass das Querrohr 11 in axialer Richtung festgelegt drehbar gegenüber den Schienenpaaren 2, 3 gelagert ist.

Die drehbare Lagerung des Querrohres 11 ermöglicht es, dieses zur Betätigung der Verriegelungsvorrichtungen 15 zu verwenden. Hierzu ist im Bereich einenends des Querrohres 11, im Ausführungsbeispiel im Bereich des tunnelseitigen Schienenpaares 3, ein Bedienhebel 10 an dem Querrohr 11 angeschweißt. Der Bedienhebel 10 erstreckt sich von einem vorderen, für einen Nutzer zugänglichen Bereich über das Querrohr 11 hinaus parallel zum Schienenpaar 3 bis in einen Eingriffsbereich mit dem Betätigungselement 16 der Verriegelungsvorrichtung 15 des tunnelseitigen Schienenpaares 3. Ein Anheben des vorderen Endes des Bedienhebels 10 bewirkt eine Verdrehung des Querrohres 11, wobei das dem vorderen Ende gegenüberliegende hintere, der Verriegelungsvorrichtung 15 zugeordnete Ende des Bedienhebels 10 mit dem Betätigungselement 16 in Eingriff gelangt und dieses in eine Freigabeposition verschiebt, in der die Verriegelungsstifte 17 mit der Unterschiene 4 außer Eingriff gelangen.

Eine Übertragung der Betätigungsbewegung des Bedienhebels 10, welche eine Drehbewegung des Querrohres 11 zur Folge hat, auf die dem türseitigen Schienenpaar 2 zugeordnete Verriegelungsvorrichtung 15 erfolgt über einen Steuerungshebel 18. Dieser erstreckt sich im Bereich des türseitigen Schienenpaares 2 von dem Querrohr 11 bis in einen Eingriffsbereich mit dem Betätigungselement 16 der dem türseitigen Schienenpaar 2 zugeordneten Verriegelungsvorrichtung 15. In Folge der durch eine Betätigung des Bedienhebels 10 hervorgerufenen Verdrehbewegung des Querrohres 11 erfolgt durch ein Zusammenwirken des Steuerungshebels 18 mit dem Betätigungselement 16 ebenfalls eine Verstellung der Verriegelungsstifte 17 der dem türseitigen Schienenpaar 2 zugeordneten Verriegelungsvorrichtung 15 in eine Außereingriffsstellung mit der Unterschiene 4. Infolge der dann an beiden Verriegelungsvorrichtungen 15 erfolgten Verstellung in eine Freigabeposition ist eine Längsverstellung der Sitzfläche 12 durch eine Verschiebung der Oberschienen 5 relativ gegenüber den Unterschienen 4 möglich. Nach Erreichen der gewünschten Längsverstellung gelangen die Verriegelungsvorrichtungen 15 infolge einer nicht mehr vorliegenden Betätigung des Bedienhebels 10 vorzugsweise federvorgespannt in ihre Verriegelungsposition.

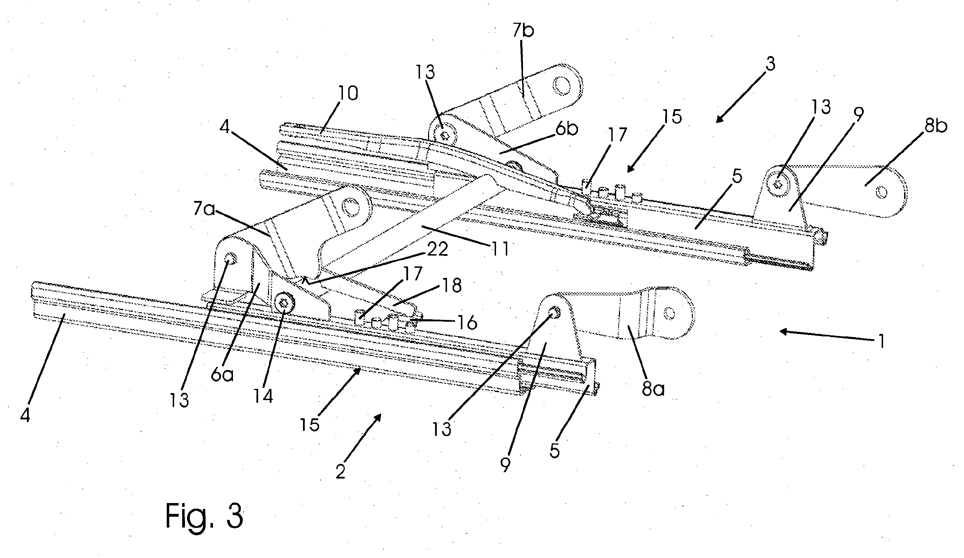

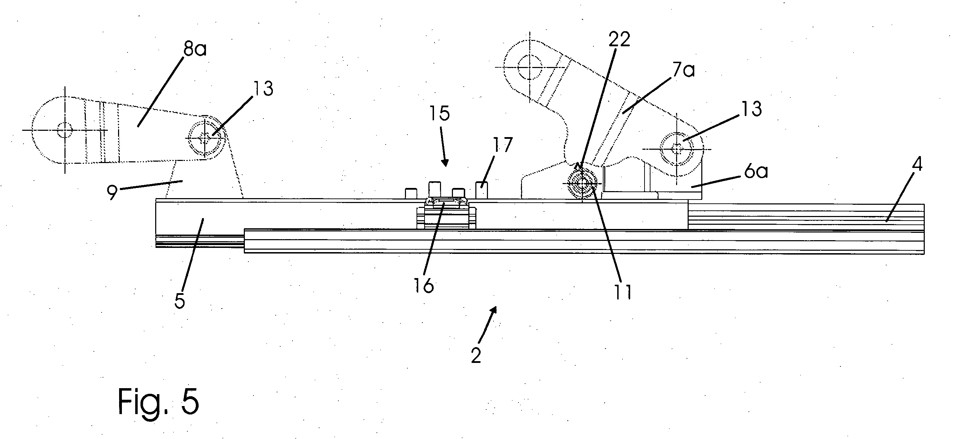

Zur Festlegung einer maximal abgesenkten Position des über die Lagerschwingen 7a, 7b, 8a, 8b in der Höhe verstellbaren Sitzfläche 12 ist die vordere Lagerschwinge 7a des türseitigen Schienenpaares 2 derart mit dem vorderen Lagerschwingenhalter 6a verbunden, dass sich das Querrohr 11 im Schwenkbereich der vorderen Lagerschwinge 7a befindet. Die maximal abgesenkte Position der Sitzfläche 12 wird durch die Anlage der vorderen Lagerschwinge 7a an dem Querrohr 11 bestimmt, wobei in dieser Position eine Kontaktfläche 22 der Lagerschwinge 7a auf dem Querrohr 11 aufliegt. Die Kontaktfläche 22 ist dabei zur Herstellung einer flächigen Anlage an dem Querrohr 11 an dessen Kontur angepasst (vgl. Fig. 3-5).

## Patentansprüche

1. Sitzuntergestell für einen Kraftfahrzeugsitz, mit
- parallel im Abstand voneinander angeordneten Schienenpaaren (2, 3), mit
- jeweils einer längsverschiebbar gegenüber einer Unterschiene (4) geführten, über eine Verriegelungsvorrichtung (15) an der Unterschiene (4) arretierbaren Oberschiene (5),
- einer Sitzstruktur, die mit den Oberschienen (5) verbunden ist und
- einem sich im Wesentlichen rechtwinklig zu den Oberschienen (5) erstreckenden und mit diesen verbundenem Querträger (11), der die Schienenpaare (2, 3) crashstabil gegeneinander abstützend in seiner axialen Richtung gegenüber den Oberschienen (5) festlegt und drehbar mit diesen verbunden ist, wobei zur Verstellung der Verriegelungsvorrichtung (15) zwischen einer die Oberschiene (5) an der Unterschiene (4) festlegenden Arretierungsposition und einer die Oberschiene (5) gegenüber der Unterschiene (4) freigebenden Freigabeposition an dem Querträger (11) ein Bedienhebel (10) und ein Steuerungshebel (18) im Abstand voneinander verdrehfest und jeweils mit einer Verriegelungsvorrichtung (15) in Eingriff bringbar angeordnet ist, wobei
an der Oberschiene (5) eine vordere und/oder hintere Lagerschwinge (7a, 7b, 8a, 8b) jeweils gelenkig mit einem an der Oberschiene (5) angeordneten Lagerschwingenhalter (6a, 6b, 9) verbunden ist **dadurch gekennzeichnet, dass** der Querträger (11) endseitig mit zwei gegenüberliegend angeordneten Lagerschwingenhaltern (6a, 6b, 9) in axialer Richtung festgelegt verdrehbar mit diesen verbunden ist.

2. Sitzuntergestell nach Anspruch 1, **dadurch gekennzeichnet, dass** die Lagerschwingen (7a, 7b, 8a, 8b) des türseitigen und fahrzeugmittigen Schienenpaares (2, 3) eine voneinander abweichende Geometrie aufweisen, insbesondere derart, dass die Sitzstruktur, insbesondere eine Sitzschale (12), asymmetrisch zu den Schienenpaaren (2, 3) angeordnet ist.

3. Sitzuntergestell nach einem der vorhergehenden Ansprüche, **dadurch gekennzeichnet, dass** die Lagerschwinge (7a, 7b, 8a, 8b) mindestens eines Schienenpaares (2, 3), vorzugsweise beide Lagerschwingen (7a, 7b, 8a, 8b) Reinschrift (2, 3), eine türseitig oder fahrzeugmittig gerichtete Biegung aufweist.

4. Sitzuntergestell für einen Kraftfahrzeugsitz nach einem der vorhergehenden Ansprüche, **dadurch gekennzeichnet, dass** mindestens eine vordere Lagerschwinge (7a, 7b) mit dem Querträger (11) in Eingriff bringbar ist.

5. Sitzuntergestell nach Anspruch 4, **dadurch gekennzeichnet, dass** die mit dem Querträger (11) in Eingriff bringbare vordere Lagerschwinge (7a, 7b) eine an die Kontur des Querträgers (11) angepasste Kontaktfläche (22) aufweist.

6. Sitzuntergestell nach einem der vorhergehenden Ansprüche, **dadurch gekennzeichnet, dass** der Querträger durch ein Querrohr (11) gebildet ist.

7. Sitzuntergestell nach Anspruch 6, **dadurch gekennzeichnet, dass** das Querrohr (11) über endseitige Stirnflächen (21) an den Oberschienen (5) anliegt, insbesondere an einander zugewandten Innenflächen der vorderen Lagerschwingenträger (7a, 7b) anliegt.

8. Sitzuntergestell nach einem der vorhergehenden Ansprüche, **dadurch gekennzeichnet, dass** die jeweils mit einer Verriegelungsvorrichtung (15) in Eingriff bringbaren Bedienhebel (10) und Steuerüngshebel (18) an den Querträger, insbesondere das Querrohr (11), angeschweißt, insbesondere lasergeschweißt sind.

## Claims

1. A seat base frame for a motor vehicle seat, with
- pairs of tracks (2, 3) disposed in parallel spaced apart from each other
- each having an upper rail (5) longitudinally displaceably guided relative to a lower rail (4) and lockable by means of a locking device (15) on the lower rail (4),
- a seat structure connected to the upper rails (5) and
- a transverse support (11) extending substantially perpendicular to the upper rails (5) and connected thereto, which fixes the pairs of tracks (2, 3) in a crash-stable manner against each other supportingly in its axial direction with respect to the upper rails (5) and is rotatably connected with them, wherein, for the adjustment of the locking device (15), an actuating lever (10) and a control lever (18) are arranged in a twist-proof manner at a distance from each other and each engageable with a locking device (15) between a locked position fixing the upper rail (5) on the lower rail (4) and a release position releasing the upper rail (5) with respect to the lower rail (4) on the transverse support (11), wherein on the upper rail (5) a front and/or rear mounting linkage (7a, 7b, 8a, 8b) is respectively connected in a jointed manner with a mounting linkage holder (6a, 6b, 9) arranged on the upper rail (5), **characterized in that** the transverse support (11) is fixed in the axial direction on the end side with two oppositely arranged mounting linkage holders (6a, 6b, 9), being rotatably connected with them.

2. The seat base frame according to claim 1, **characterized in that** the mounting linkages (7a, 7b, 8a, 8b) of the door-side and vehicle-center pair of tracks (2, 3) have a differing geometry, in particular such that the seat structure, in particular a seat pan (12), is arranged asymmetrically to the pairs of tracks (2, 3).

3. The seat base frame according to one of the preceding claims, **characterized in that** the mounting linkage (7a, 7b, 8a, 8b) of at least one pair of tracks (2, 3), preferably both mounting linkages (7a, 7b, 8a, 8b) of a pair of tracks (2, 3), have a door-side or vehicle-center-aligned bend.

4. The seat base frame for a motor vehicle seat according to one of the preceding claims, **characterized in that** at least one front mounting linkage (7a, 7b) is engageable with the transverse support (11).

5. The seat base frame according to claim 4, **characterized in that** the front mounting linkage (7a, 7b) engageable with the transverse support (11) has a contact surface (22) adjusted to the contour of the transverse support (11).

6. The seat base frame according to one of the preceding claims, **characterized in that** the transverse support is formed by a cross tube (11).

7. The seat base frame according to claim 6, **characterized in that** the cross tube (11) rests on the upper rails (5) via end-side front surfaces (21), in particular rests on facing inner surfaces of the front mounting linkage supports (7a, 7b).

8. The seat base frame according to one of the preceding claims, **characterized in that** the actuating lever (10) and the control lever (18), respectively engageable with a locking device (15), are welded, in particular laser-welded, on the transverse support, in particular the cross tube (11).

## Revendications

1. Support de siège de siège de véhicule, avec
- des paires de rails (2, 3) disposées parallèlement de façon espacée l'une de l'autre, avec
- respectivement un rail supérieur (5) guidé de façon coulissante longitudinalement par rapport à un rail inférieur (4) et pouvant être bloqué sur le rail inférieur (4) par le biais d'un dispositif de verrouillage (15),
- une structure de siège qui est raccordée aux rails supérieurs (5) et
- une traverse (11), s'étendant de façon essentiellement à angle droit par rapport aux rails supérieurs (5) et raccordée à ceux-ci, qui immobilise les paires de rails (2, 3), en appui l'une contre l'autre de façon stable en cas de collision, dans sa direction axiale par rapport aux rails supérieurs (5), et qui est raccordée aux rails supérieurs de façon à pouvoir tourner avec eux, un levier de manoeuvre (10) et un levier de commande (18) étant disposés sur la traverse (11), bloqués en torsion, à distance l'un de l'autre, et pouvant respectivement être amenés en prise avec un dispositif de verrouillage (15), pour le déplacement du dispositif de verrouillage (15) entre une position de blocage immobilisant le rail supérieur (5) sur le rail inférieur (4) et une position de libération libérant le rail supérieur (5) par rapport au rail inférieur (4),
une bielle oscillante (7a, 7b, 8a, 8b) avant et/ou arrière étant, sur le rail supérieur (5), raccordée respectivement de façon articulée à un support de bielle oscillante (6a, 6b, 9) disposé sur le rail supérieur (5), **caractérisé en ce que** la traverse (11) est, côté extrémité, raccordée à deux supports de bielle oscillante (6a, 6b, 9) disposés en opposition réciproque, de façon à pouvoir tourner avec ces supports et étant immobilisée dans la direction axiale.

2. Support de siège selon la revendication 1, **caractérisé en ce que** les bielles oscillantes (7a, 7b, 8a, 8b) de la paire de rails (2, 3) située côté porte et au centre du véhicule présentent une géométrie qui diverge l'une de l'autre, en particulier **en ce que** la structure de siège, en particulier une coque de siège (12), est disposée de façon asymétrique par rapport aux paires de rails (2, 3).

3. Support de siège selon une des revendications précédentes, **caractérisé en ce que** la bielle oscillante (7a, 7b, 8a, 8b) d'au moins une paire de rails (2, 3), de préférence les deux bielles oscillantes (7a, 7b, 8a, 8b) d'une paire de rails (2, 3), présentent une flexion dirigée vers le côté porte ou vers le centre du véhicule.

4. Support de siège de siège de véhicule selon une des revendications précédentes, **caractérisé en ce qu'**au moins une bielle oscillante (7a, 7b) avant peut être amenée en prise avec la traverse (11).

5. Support de siège selon la revendication 4, **caractérisé en ce que** la bielle oscillante (7a, 7b) avant pouvant être amenée en prise avec la traverse (11) présente une surface de contact (22) adaptée au contour de la traverse (11).

6. Support de siège selon une des revendications précédentes, **caractérisé en ce que** la traverse est formée par un tube transversal (11).

7. Support de siège selon la revendication 6, **caractérisé en ce que** le tube transversal (11) est, par le biais de surfaces frontales (21) côté extrémité, adjacent aux rails supérieurs (5), en particulier est adjacent à des surfaces intérieures, tournées l'une vers l'autre, des supports de bielle oscillante (7a, 7b) avant.

8. Support de siège selon une des revendications précédentes, **caractérisé en ce que** le levier de manoeuvre (10) et le levier de commande (18) pouvant respectivement être amenés en prise avec un dispositif de verrouillage (15) sont assemblés par soudage à la traverse, en particulier au tube transversal (11), en particulier par soudage laser.
